# EUROPEAN PATENT SPECIFICATION

(11) **EP 1 654 998 B1**
(45) Date of publication and mention of the grant of the patent: **07.05.2014**
(21) Application number: 04747434.1
(22) Date of filing: 13.07.2004
(51) Int. Cl.: A61C 5/09, A61C 5/10, A61C 13/08, A61C 13/00

(54) **PROCESS FOR PRODUCING A DENTAL PROSTHESIS AND KIT FOR USE THEREIN**
VERFAHREN ZUR HERSTELLUNG EINER DENTALPROTHESE UND KIT ZUR VERWENDUNG DABEI
PROCÉDÉ DE PRODUCTION D'UNE PROTHÈSE DENTAIRE ET NÉCESSAIRE UTILISÉ AVEC CE PROCÉDÉ

(30) Priority: 17.07.2003 JP 2003198682; 26.12.2003 JP 2003434350
(43) Date of publication of application: 10.05.2006
(60) Divisional application: 11166741.6
(73) Proprietor: Kuraray Noritake Dental Inc., Kurashiki-shi, Okayama 710-0801 (JP)
(72) Inventor: SAGO, Sumihito c/o Noritake Co., Limited, Nagoya-shi, Aichi 4518501 (JP); SAKAKIBARA, Toshio c/o Noritake Co., Limited, Nagoya-shi Aichi 4518501 (JP); HIRATA, Tatsuhiko c/o Noritake Co., Limited, Nagoya-shi, Aichi 4518501 (JP); MATSUMOTO, Atsushi c/o Noritake Co., Limited, Nagoya-shi, Aichi 4518501 (JP)
(74) Representative: TBK
(86) International application number: PCT/JP2004/009968
(87) International publication number: WO 2005/007009

(56) References cited:
- JP-A- 4 126 143
- JP-A- 57 020 262
- US-A- 3 934 348
- US-A- 4 307 044

## Description

### TECHNICAL FIELD

The present invention relates to a method of manufacturing a dental prosthesis, and a kit (i.e., dental porcelain set) that is used for the same.

### BACKGROUND ART

A dental prosthesis used in an oral cavity needs to have a strength bearing a strong biting strength, and is also required to have a beauty for having an appearance equivalent to that of a natural tooth. For this reason, conventionally, there is manufactured a dental prosthesis including: a substrate (i.e., a body portion serving as a base (core) of the prosthesis) such as a frame having high strength; and an armored portion formed on the substrate, for providing a color tone similar to that of a natural tooth, or a transparency. As this kind of dental prosthesis, there are some described in Patent Documents 1 and 2, for example. As means for forming the armored portion on the substrate, there is widely used a method of mounting a malaxation of powders of porcelain (i.e., dental ceramic material) with water or solvent prepared exclusively for this purpose, on a surface of the substrate (such as the above-described frame), by an instrument such as brush. In the present application, the armored portion of the dental prosthesis is constituted by the porcelain, and the thus constituted armored portion is referred to as "ceramic layer" where appropriate.

Further, as a method different from the above-described mounting method, there is a casting process, namely, a method of casting a porcelain (forming the armored portion) on a surface of the frame or the like at a high temperature, by using a casting mold having a predetermined configuration. This casting process is advantageous in that the armored portion having predetermined configuration and thickness can be formed on the substrate with a high accuracy. As this kind of technique, there is one disclosed in Patent Document 3.

Further, conventionally, the dental prosthesis has been constituted by covering the surface of a metal frame with the porcelain adjusted to the color tone of the natural tooth. In recent years, however, there is used an all-ceramic prosthesis in which its frame also is constituted by a ceramic material (see Patent Document 4, for example). Such an all-ceramic porcelain provides an advantage eliminating or easing problems such as metal allergy caused by contact of a metal with a living body and impossibility in obtaining the color tone of the natural tooth due to a non-transparent backing layer (or back coating layer) provided to hide a metallic color of the metal frame.

As the above-described all-ceramic prosthesis, there are one constituted in its entirety by a crystallized glass such as silica lithium glass, and one including a frame which is constituted by a ceramic sintered body and an armored portion, i.e., a ceramic layer which is constituted by a glass porcelain and which is formed on a surface of the frame. For example, the above-mentioned Patent Document 4 discloses a two-phase porcelain composition in which leucite crystal phase is dispersed within a feldspar glass matrix.

However, since the ceramic prosthesis constituted in its entirety by the crystallized glass whose mechanical strength and tenacity are relatively low, it can not be used for a bridge or the like required to have a strength, and accordingly its use is limited to a single crown. On the other hand, as the ceramic sintered body constituting the above-described frame, there are spinel, alumina and zirconia. Among them, particularly, the frame made of alumina is frequently used. However, neither alumina nor spinel has a mechanical strength and tenacity that are high enough to be used as a bridge. Therefore, even the ceramic prosthesis with the frame made of the alumina or spinel can replace only a front tooth, where it is used as a bridge. The ceramic prosthesis with the frame made of the alumina or spinel can be used only as a single crown, where it is intended to replace a molar tooth on which a large biting strength acts.

On the other hand, the zirconia is relatively excellent in mechanical strength and tenacity, among the ceramic sintered bodies. The zirconia can be used as a bridge for replacing three teeth including a molar tooth, and also as a bridge for replacing five, six or other large number of teeth. Further, the zirconia can be used even as a full mouth. Moreover, the zirconia advantageously has a color tone desirable in a dentistry use. In particular, it is considered that the zirconia partially stabilized by solid solution with 3 (mol) of Y₂O₃ is the most desirable with respect to mechanical strength, tenacity, and color tone.
- [Patent Document 1]: JP-H07-23986-A
- [Patent Document 2]: JP-2000-139953-A
- [Patent Document 3]: WO01/021088
- [Patent Document 4]: JP-3351701-B

Futher, US 3934348 A discloses a method for forming a porcelain crown and US 4307044 A discloses a method of making a casting.

### DISCLOSURE OF INVENTION

### OBJECT TO BE SOLVED BY THE INVENTION

By the way, there is a case where a coating including at least two ornament layers is formed as the armored portion on the substrate, in order to express a color tone closer to that of a natural tooth and a light permeability (transparency) on a surface of the dental prosthesis (for example, crown). Since these two layers are fixed on the surface of the substrate such as a frame, by sequentially subjecting the two layers to a heat treatment, there was a case where, during the heat treatment for forming an upper layer of the armored portion, a lower layer previously formed on the surface of the substrate is softened and caused to flow as a result of flow of the porcelain forming the upper layer. If such a flow of the lower layer arises, a thickness of the lower layer is likely to be partially changed, and the frame could be exposed depending upon the case. The partial change of the thickness and the exposure of the frame cause inconveniences that there is a part not providing the desired color tone and transparency and that the prosthesis does not provide the desired configuration. For example, where, on a surface of an ornament layer (hereinafter referred to as "back coating layer") that is formed on the substrate so as to serve as a backing layer, another ornament layer (hereinafter referred to as "cast coating layer") is formed by a casting process, the back coating layer could be partially moved by flow of a casting porcelain (which forms the cast coating layer) when the casting porcelain is cast at a high temperature, and the back coating layer could have variation in its thickness. This causes the formed position and thickness value of the cast coating layer (formed to express the desired color tone and transparency) to be different from those as designed. That is, the above problem is serious, especially, where the armored portion is formed by the casting process.

As is clear from the above description, where a plurality of coating layers are formed on the substrate (typically, where the ornament portion is formed by laminating two or more coating layers) by the casting process, it is required that, when the porcelain for forming the cast coating layer is poured on the surface of the back coating layer, the back coating layer (precisely, the ceramic material forming the back coating layer) is not moved. Thus, a method satisfying such a requirement and materials (e.g., porcelain for forming the backing layer and porcelain for forming the coating layer) suitable to be used for the method are desired.

Coefficients of thermal expansion of titanium, other metal (other than titanium) and alumina as materials conventionally used for forming the frame are about 7.8 × 10⁻⁶ (/°C), 11.5 × 10⁻⁶ (/°C) or higher, and 6.8 × 10⁻⁶ (/ °C), respectively. On the other hand, coefficient of thermal expansion of zirconia is about 10 × 10⁻⁶ (/°C), which is different from that of any one of the conventionally used materials. Therefore, in case of use of a porcelain that is prepared to be adjusted to the coefficient of thermal expansion of the conventional material, in a cooling process of a heat treatment carried out for fixing the porcelain to the frame, there is generated a tensile stress acting on a ceramic layer causing a crack, if the coefficient of thermal expansion of the material forming the ceramic layer is higher that of zirconia. On the contrary, in the cooling process, there is generated a tensile stress acting on the frame causing a crack, if the coefficient of thermal expansion of the material forming the ceramic layer is lower than that of zirconia. In view of contraction behavior in the cooling process of the heat treatment, it is desirable that the coefficient of thermal expansion of the ceramic layer is substantially equal to or slightly lower than that of the frame, for preventing the crack. Therefore, there is desired a porcelain which has coefficient of thermal expansion suitable for the frame made of zirconia and which is suitably adjustable to a color tone of a natural tooth.

The present invention was made in view of the above-described background circumstances. It is a first object of the invention is to provide a dental-prosthesis manufacturing method which is, particularly, practiced by casting, and which enables its back coating layer to be formed to have a desired thickness even in case of formation of two or more coating layers on a substrate, and also a kit (combination of materials) preferably used in the manufacturing method.

### MEASURES FOR ACHIEVING THE OBJECTS

The gist of a dental-prosthesis manufacturing method of a first invention for achieving the above-described first object is that the method includes: (a) a step of preparing a substrate of the dental prosthesis that is constituted by a dental molding material; (b) a step of forming a back coating layer on at least a part of a surface of the substrate, by using a first porcelain that is constituted principally by ceramic; (c) a step of forming a casting mold such that the substrate is disposed in the casting mold and such that a predetermined void is provided on a surface of the back coating layer; and (d) a step of forming a cast coating layer on at least a part of a surface of the back coating layer, by pouring a second porcelain into the void at a predetermined casting temperature, the second porcelain being constituted principally by ceramic whose composition is different from that of the ceramic of the first porcelain and being characterized in that viscosity thereof at the predetermined casting temperature is lower than that of the first porcelain.

The gist of a kit of a second invention for achieving the above-described first object is that the kit for forming, on a surface of a substrate of a dental prosthesis, an armored portion constituted by at least two coating layers, the kit including: (a) a first material constituted principally by ceramic for preparing a first porcelain that forms a back coating layer on the surface of the substrate; and (b) a second material constituted principally by ceramic for preparing a second porcelain that forms, by casting, a coating layer on a surface of at least a part of the back coating layer, such that viscosity of the first porcelain at a predetermined casting temperature is at least 1.5 times as high as that of the second porcelain.

### EFFECTS OF THE INVENTION

According to the manufacturing method of the first invention, in the formation of the at least two coating layers constituting the armored portion, the cast coating layer is superposed, by casting, on at least a part of the surface of the back coating layer serving as a backing. In this instance, since the viscosity of the second porcelain (forming the cast coating layer) at the casting temperature is lower than that of the first porcelain (forming the back coating layer), movement of the back coating layer is advantageously restrained.

That is, since the viscosity of the first porcelain upon casting of the second porcelain is higher than that of the second porcelain, fluidity of the first porcelain is lower than that of the second porcelain. Therefore, since the first porcelain is not likely to be influenced by flow of the second porcelain at high temperature upon casting of the second porcelain, the second porcelain having the higher fluidity is poured into a space (i.e., the above-described void portion) which has a desired configuration and which is located between the casting mold and the back coating layer, before movement of the first porcelain. As a result of this, the first porcelain, i.e., the previously formed back coating layer is restrained from being moved in a direction of flow of the second porcelain that is poured posteriorly.

Therefore, according to the manufacturing method of the first invention, it is possible to manufacture, by a casting process, a dental prosthesis having an armored portion which is constituted by at least two coating layers (i.e., ornament layers) and which has an excellent beauty. Further, by mounting another porcelain, as needed, it is possible to obtain a dental prosthesis (e.g., artificial crown) which has an excellent beauty and which is still closer to an natural tooth.

According to the kit of the second invention, since the kit includes the first material for preparing the above-described first porcelain and the second material for preparing the second porcelain whose viscosity at the predetermined casting temperature is lower than that of the first porcelain, the manufacturing method of the first invention can be easily practiced. That is, it is possible to manufacture, by a casting process, a dental prosthesis having an armored portion which is constituted by at least two coating layers (i.e., ornament layers) and which has an excellent beauty.

In the manufacturing method of the above-described first invention, preferably, the casting mold forming step includes: a sub-step of forming, on at least a part of the surface of the back coating layer, a model layer made of a material that is eliminable by burning thereof; a sub-step of embedding the model layer in a matrix (which is typically formed of phosphate or plaster material that is called an investment material) constituting the casting mold; and a sub-step of forming the casting mold, which is provided with the void corresponding to the model layer, by burning and eliminating the model layer after hardening the matrix.

With implementations of the above sub-steps, it is possible to form the casting mold having the void portion whose configuration and size are correspond to those of the model layer. Thus, by forming the model layer having a desired configuration on at least a part of the surface of the back coating layer, it is possible to accurately form the cast coating layer having the same configuration.

In the above-described first invention, it is preferable that the substrate is a frame made of metal or ceramic.

The frame made of metal or ceramic has a mechanical strength that is sufficiently high even at a high temperature, and can be accordingly used as the substrate of the dental prosthesis on which the armored portion is formed by a casting process.

In the above-described first invention, it is preferable that the first porcelain is provided by a porcelain whose viscosity at the casting temperature is at least 1.5 times as high as that of the second porcelain.

This arrangement in which the viscosity of the first porcelain at the casting temperature is at least 1.5 times as high as that of the second porcelain makes it possible to further improve the effect of preventing movement of the back coating layer upon casting.

In the above-described first invention, it is preferable that viscosity of the first porcelain at the casting temperature ranges from 2 × 10⁶ (cP) to 5 × 10⁷ (cP), while viscosity of the second porcelain at the casting temperature ranges from 1 × 10⁶ (cP) to 3 × 10⁷ (cP).

With the viscosities of the first and second porcelains being set within the respective rages described above, it is possible to advantageously prevent movement of the back coating layer. Further, with the viscosity of the second porcelain being set within the above-described range, it is possible to cause the second porcelain to be poured into narrow portions of a cavity formed in the casting mold, without an excessive force being applied to the second porcelain.

In the above-described first invention, it is preferable that each of the first and second porcelains has, as a main component, a glass composition that is essentially constituted by oxides having respective percentage contents as described below.

That is, the glass composition contained in the first porcelain includes 40-75 (mass %) of SiO₂, 10-20 (mass %) of Al₂O₃ 5-15 (mass %) of K₂O, 2-10 (mass %) of Na₂O, 0.1-2 (mass %) of Li₂O, 0-7 (mass %) of ZrO₂, 0-5 (mass %) of CaO, 0-5 (mass %) of MgO, and 0-30 (mass %) of SnO₂, where its entirety is expressed by 100 (mass %).

On the other hand, the glass composition contained in the second porcelain includes 60-70 (mass %) of SiO₂, 10-20 (mass %) of Al₂O₃, 5-15 (mass %) of K₂O, 3-15 (mass %) of Na₂O, 0.1-3 (mass %) of Li₂O, 0-3 (mass %) of ZrO₂, 0.1-5 (mass %) of CaO, 0.1-5 (mass %) of MgO, 0-3 (mass %) of B₂O₃, 0-3 (mass %) of CeO₂, and 0-7 (mass %) of Sb₂O₃, where its entirety is expressed by 100 (mass %).

Where the ceramic included in the first porcelain has the above-described glass composition as its main component, it is possible to easily form the back coating layer having a natural color tone close to that of a natural tooth. Further, where the ceramic included in the second porcelain has the above-described glass composition as its main component, it is possible to easily form the cast coating layer having a transparency close to that of a natural tooth. Thus, with combination of the at least two coating layers, it is possible to form the armored portion having a natural appearance close to that of a natural tooth.

The kit of the above described second invention, in which the viscosity of the first porcelain at the casting temperature is at least 1.5 times as high as that of the second porcelain, makes it possible to advantageously prevent movement of the back coating layer upon casting.

In the above-described second invention, it is preferable that the first and second materials of the kit are prepared such that the viscosity of the first porcelain at the casting temperature ranges from 2 × 10⁶ (cP) to 5 × 10⁷ (cP), while viscosity of the second porcelain at the casting temperature ranges from 1 × 10⁶ (cP) to 3 × 10⁷ (cP).

With use of the first and second materials prepared such that the viscosities of the first and second porcelains are set within the respective rages described above, it is possible to more effectively prevent movement of the back coating layer upon casting. Further, with the viscosity of the second porcelain being set within the above-described range, it is possible to cause the second porcelain to be poured into narrow portions of a cavity formed in the casting mold, without an excessive force being applied to the second porcelain.

In the above-described second invention, it is preferable that each of the first and second materials of the kit has, as a main component, a glass composition that is essentially constituted by oxides having respective percentage contents as described below.

That is, the glass composition contained in the first material includes 40-75 (mass %) of SiO₂, 10-20 (mass %) of Al₂O₃, 5-15 (mass %) of K₂O, 2-10 (mass %) of Na₂O, 0.1-2 (mass %) of Li₂O, 0-7 (mass %) of ZrO₂, 0-5 (mass %) of CaO, 0-5 (mass %) of MgO, and 0-30 (mass %) of SnO₂, where its entirety is expressed by 100 (mass %).

On the other hand, the glass composition contained in the second material includes 60-70 (mass %) of SiO₂, 10-20 (mass %) of Al₂O₃, 5-15 (mass %) of K₂O, 3-15 (mass %) of Na₂O, 0.1-3 (mass %) of Li₂O, 0-3 (mass %) of ZrO₂, 0.1-5 (mass %) of CaO, 0.1-5 (mass %) of MgO, 0-3 (mass %) of B₂O₃, 0-3 (mass %) of CeO₂, and 0-7 (mass %) of Sb₂O₃, where its entirety is expressed by 100 (mass %).

With the above-described glass composition being contained in the first material, it is possible to prepare the first porcelain that is capable of easily forming the back coating layer having a natural color tone close to that of a natural tooth. Further, with the above-described glass composition being contained in the second material, it is possible to prepare the second porcelain that is capable of easily forming the cast coating layer having a transparency close to that of a natural tooth. Thus, with use of the kit including these materials, it is possible to form the armored portion having a natural appearance close to that of a natural tooth, on the surface of the substrate of the prosthesis, by utilizing the casting process.

Further, it is preferable that the kit disclosed herein includes, as the first and second materials, the first and second porcelains having forms that can be readily used in the manufacturing method of the first invention.

Matters (e.g., means for forming the coating layers, and casting process) which are necessary for carrying out the present invention and which are other than matters (e.g., viscosities and impositions of the first and second porcelains) particularly referred in the present specification can be grasped as matters that can be designed by a person with ordinary skill in a field to which the invention pertains, on the basis of a prior art in the field. The present invention can be carried out based on matters disclosed in the present specification and also matters known in the field. It is noted that the term "mass %" is substantially synonymous with a term "wt %" that has been previously used.

The "dental prosthesis" referred in the present specification is a prosthesis that is to be provided within an oral cavity, and is not particularly limited but may be any prosthesis that can be manufactured by methods disclosed herein. In the first and second inventions, for example, the dental prosthesis encompasses any prosthesis compensating a part or all of missing tooth or teeth, which is handled in dentistry, such as crown, bridge, covering crown, inlay, onlay and base denture. Further, the third and fourth inventions are equally applicable to various kinds of dental prostheses, specifically, such as bridge, full mouth, crown and covering crown.

The substrate (i.e., core member or frame of the prosthesis) used in the manufacturing method of the first invention may be constituted by any dental molding material, and is not limited to any particular material. Any one of conventionally known materials having a strength sufficient for the substrate of the dental prosthesis can be used.

Particularly, metallic or ceramic material is preferable as the material used for the substrate, since such a material is capable of establishing heat resistance and high mechanical strength. Where metallic material is used, it is preferable to use one which is not likely to provide influence on a living body, specifically, such as nickel, cobalt, palladium, iridium, gold, silver, copper and platinum. Further, the metallic material may be provided by alloy of combination of two or more kinds of these metals with desired proportions thereof. Among these metals, particularly, gold, platinum, palladium, silver, or alloy constituted by combination thereof is more preferable, since they are more unlikely to influence on a living body.

Where ceramic material is used, it is possible to use a conventionally known one that is excellent in affinity with a living body, without any particular limitation. Particularly, one that is excellent in strength and corrosion resistance, such as alumina, zirconia, spinel and mullite, is preferable.

The ceramic material is more preferable than the metallic material in that its color tone and transparency are close to those of a natural tooth. Among the ceramic material, zirconia is particularly preferable since it has a white color close to color of a natural tooth.

In the first invention, a basic configuration of the substrate such as the frame is suitably determined, conforming to position and configuration of a tooth that is compensated by the prosthesis. The substrate can be formed, for example, conforming to configuration of a broken tooth or a ground tooth from which a decayed portion has been removed.

As a method of forming the substrate, any conventionally known means may be employed. Specifically, for example, by cast forming with use of a tooth form model having a desired configuration, it is possible to easily and accurately form the substrate. Alternatively, depending upon content of the prosthesis, the substrate may be provided by one that has been previously formed conforming to a mount portion of existing tooth form and/or oral cavity. Further, either available one of them may be used as the substrate (e.g., frame) of the dental prosthesis.

The substrate or frame does not necessarily have to consist of only a main body of the substrate or frame, but may additionally include some coating which is previously formed on a surface of the main body and which is constituted by one or at least two materials different from the material of the substrate or frame. In practice of the present invention, the substrate or frame encompasses such a one that includes the coating previously formed on the main body. In such a substrate, too, the present invention can be carried out by forming the above-described back coating layer or first ceramic layer.

Next, there will be explained materials preferably used in practice of the first invention.

As the first porcelain used for forming the back coating layer in the manufacturing method disclosed herein, it is possible to use a porcelain which is constituted principally by ceramic and which is conventionally used to form an armored portion of a dental prosthesis. However, it is preferable to use one whose viscosity is relatively high under condition of high temperature upon casting of the second porcelain. Further, it is preferable to use a ceramic material constituted by composition capable of forming the back coating layer that establishes a cooler tone (which makes it difficult to exhibit the color of the substrate or which cooperates with the color of the substrate to exhibit a color close to that of a natural tooth) and/or a transparency (light permeability). Further, it is preferable to use a ceramic material whose coefficient of thermal expansion is close to that of the substrate, from a point of view of prevention of occurrence of crack or the like in heat treatment.

The ceramic, by which the first porcelain is principally constituted, is not particularly limited, as long as it is suitable for a dentistry use. For establishing an excellent beauty of the prosthesis, use of ceramic oxide is preferable. For example, it is preferable to use ceramic oxide containing, as components, SiO₂, Al₂O₃, K₂O, Na₂O, Li₂O, ZrO₂, CaO, MgO, SnO₂, B₂O₃, CeO₂, P₂O₅, F₂O₃, La₂O₃, Sb₂O₃ BaO, SrO, ZnO, TiO₂, CeO₂, Y₂O₃, Tb₂O₃ and Fe₂O₃. That is, containing Al₂O₃, K₂O, Na₂O and Li₂O in addition to SiO₂ is preferable to express a color tone close to that of a natural tooth. Further, the ceramic oxide may contain ZrO₂, CaO, MgO and/or SnO₂, too, if desired. The use of material (porcelain) constituted principally by a glass composition containing these oxides is particularly preferable to improve the beauty. For example, it is preferable to use a ceramic material which contains, as its main component, a glass composition constituted essentially by 40-75 (mass %) of SiO₂, 10-20 (mass %) of Al₂O₃, 5-15 (mass %) of K₂O, 2-10 (mass %) of Na₂O, 0.1-2 (mass %) of Li₂O, 0-7 (mass %) of ZrO₂, 0-5 (mass %) of CaO, 0-5 (mass %) of MgO, and 0-30 (mass %) of SnO₂, where an entirety of the glass composition is expressed by 100 (mass %). Such a ceramic material, for example, may consist of only the above-described glass composition, or may include, in addition to the above-described glass composition, other crystalline ceramic component with its percentage content being 50 (mass %) or less (preferably 30 (mass %) or less).

As the first porcelain for forming the back coating layer, one constituted principally by crystallized glass (glass ceramic) is preferable. For example, it is preferable that the crystallized glass is provided by the glass composition containing the above-descried oxides.

The first porcelain is constituted principally by ceramic, and may contain other component. For example, where the ceramic takes the form of powders when it is served, the first porcelain may contain dispersion medium that disperse the ceramic powders. Instead, the first porcelain may contain pigment or other coloring agent that is available in dentistry, in order to express a desired color tone. Further, the first porcelain may contain a fluorescent material for giving fluorescent nature as a natural tooth.

As means for forming the back coating layer, any conventionally known means may be used. For example, the first porcelain can be applied (mounted), by using a brush or the like, on at least a part of the surface of the substrate such that the applied first porcelain has desired configuration and thickness. In case of formation of the back coating layer by this means, it is preferable to disperse the ceramic powders and other additive into suitable dispersion medium, so as to facilitate the application of the first porcelain. Although the dispersion medium is not particularly limited, there are, as preferable dispersion mediums, water, particular liquid (e.g., propylene-glycol, ethylene-glycol, glycerin), and resin (e.g., acrylic resin such as polymethyl-methacrylate, polyethyl-methacrylate, polyisobutyl-methacrylate, and polynormal-buty-methacrylate; vinyl resin such as polyvinyl-acetate; and cellulose resin such as nitro-cellulose, ethylcellulose, and cellulose-acetate-butyrate). With use of any one of the dispersion mediums, it is possible to easily prepare the porcelain taking the form of slurry or paste that is suitable for the mounting by brush or the like.

Alternatively, the back coating layer may be formed with use of a casting mold having desired configuration and thickness, by pouring the first porcelain onto at least a part of the surface of the substrate. The casting mold and the casting process may be manufactured and practiced, respectively, according to a conventionally known method. The back coating layer can be formed by substantially the same casting process as in case of formation of the cast coating layer, which will be later described in detail. Typically, after being applied or poured onto the surface of the substrate in accordance with one of the above-described methods, the first porcelain is burned so as to increase a bonding strength at which the first porcelain is bonded with the substrate, and so as to remove organic component used in the application of the first porcelain. The burning temperature, which is suitably determined depending upon, for example, the composition of the first porcelain and configuration of the back coating layer, is commonly 600-1600 (°C), preferably 700-1500 (°C), more preferably 800-1300 (°C), and still further preferably 900-1100 (°C). The burning environment is not particularly limited. Typically, the burning is done at the atmosphere or reduced pressure.

For establishing a desired color tone and transparency, the back coating layer may be formed on any portion of the surface of the substrate. For example, the back coating layer may be formed to cover substantially an entirety of the surface of the substrate, or formed only on a part of the surface of the substrate. Particularly, it is preferable that it is formed to cover substantially an entirety of the surface of the substrate, so that an outer surface of the substrate is difficult to be seen.

Further, with respect to its configuration and thickness, there is not any particular limitation. The configuration and thickness are suitably determined depending upon kind of the dental prosthesis or determined such that desired color tone and transparency are established. For example, in case of dental prosthesis such as crown and bridge, the back coating layer is formed on the substrate (body), so as to have a thickness of about 0.01-0.3 (mm), preferably 0.1 (mm) (e.g., about 0.01-0.1 (mm)).

Next, there will be explained means for forming the casting mold. In the manufacturing method of the first invention, there is no limitation in the method, as long as a desired casting mold for forming the cast coating layer can be formed.

Typically, the model layer, which is eliminable by burning the same, is formed on the surface of the substrate on which the back coating layer has been formed. Preferably, the model layer is formed to have a configuration corresponding to a desired configuration of the cast coating layer. Subsequently, the model layer is embedded in a casting matrix that is constituted by a suitable hardenable investment material, and the casting matrix is hardened. Subsequently, the model layer is burned to be eliminated in a suitable furnace, whereby the casting mold in which the void corresponding to the model layer is formed can be formed.

The model layer is required to be constituted by a material that is eliminable by its burning, and is preferably excellent in its formability. For example, as preferable materials for the model layer, there are wax and resin suitable for a dentistry use. Particularly, wax is preferable in view of its excellent formability. The "eliminable by its burning" is interpreted to mean that the material forming the model layer can be eliminated at a high temperature, and encompass a case where the material is melt due to high temperature and removed from a cavity of the casting mold via a flow channel, in addition to a case of typical elimination by the burning. The burning temperature is suitably selected depending upon the material, and is commonly about 600-1200 (°C) and preferably about 800-1000 (°C). Although not being particularly limited, a time consumed for burning of the casting mold commonly ranges from about 20 minutes to three hours (e.g., from 30 minutes to two hours).

The matrix of the casting mold is constituted by a material which has hardenability and excellent formability. It is possible to use any material that is commercially available as a dental investment material For example, plaster-based, phosphate-based, ethyl-silicate-based and alumina-cement-based investment materials can be used. Further, it is preferable that the investment material is hardenable in an ordinary temperature, since the hardenability at the ordinary temperature leads to an excellent operability.

In the manufacturing method of the first invention, any one of conventionally known various kinds of porcelains used for forming the armored portion of the dental prosthesis can be selected as the second porcelain forming the cast coating layer, provided that the viscosity of the selected porcelain at the casting temperature is lower than the viscosity of the used first porcelain at the same temperature. Particularly, where the armored portion located on the surface of the crown or in vicinity of the surface is forme, it is preferable that the porcelain is constituted principally by ceramic (particularly, glass composition) of composition providing high transparency.

The ceramic components as main components of the second porcelain is not particularly limited, but may vary depending upon content of the dental prosthesis. However, for establishing an excellent beauty of the prosthesis, it is preferable to use substantially the same ceramic oxide as shown in the above-described first porcelain by way of example. For example, it is preferable that the ceramic oxide contains SiO₂, Al₂O₈, K₂O, Na₂O, Li₂O, CaO and MgO, so as to exhibit transparency close to that of a natural tooth. Further, it may additionally contain ZrO₂, B₂O₈, CeO₂ and/or Sb₂O₃, for improving the quality. The use of ceramic material constituted principally by a glass composition containing these oxides is particularly preferable to improve the beauty. For example, it is preferable to use a ceramic material which contains, as its main component, a glass composition constituted essentially by 60-70 (mass %) of SiO₂, 10-20 (mass %) of Al₂Oa, 5-15 (mass %) of K₂O, 3-15 (mass %) of Na₂O, 0.1-3 (mass %) of Li₂O, 0-3 (mass %) of ZrO₂, 0.1-5 (mass %) of CaO, 0.1-5 (mass %) of MgO, 0-3 (mass %) of B₂O₃, 0-3 (mass %) of CeO₂ and 0-7 (mass %) of Sb₂O₈, where an entirety of the glass composition is expressed by 100 (mass %). Such a ceramic material, for example, may consist of only the above-described glass composition, or may include, in addition to the above-described glass composition, other crystalline ceramic component with its percentage content being 50 (mass %) or less (preferably 10 (mass %) or less).

The second porcelain for forming the cast coating layer may be one that is constituted principally by crystallized glass (glass ceramic). For example, it is preferable that the crystallized glass is provided by the glass composition containing the above-descried oxides.

Further, like the first porcelain, the second porcelain is constituted principally by ceramic, and may contain other component. For example, the second porcelain may contain pigment or other coloring agent that is available in dentistry, in order to express a desired color tone. Further, the second porcelain may contain a fluorescent material for giving fluorescent nature as a natural tooth.

In the manufacturing method of the first invention, the viscosity of the second porcelain at the casting temperature (at which the second porcelain is cast) is required to be lower than that of the first porcelain. The difference between the viscosities of the first and second porcelains at such a temperature range is not particularly limited, as long as the viscosity of the second porcelain is lower than that of the first porcelain. However, the viscosity of the first porcelain is desirably at least 1.2 times, preferably 1.5 times, and more preferably twice as high as that of the second porcelain. The larger the difference in viscosity is, the more the effect of prevention of flow of the first porcelain upon the casting can be obtained.

For example, the viscosity (at a predetermined casting temperature) of the first porcelain can be set to generally range from 2 × 10⁶ (cP) to 5 × 10⁷ (cP) (1 centi poises (cP) is equivalent to 0.001 (Pa·s)). On the other hand, the viscosity of the second porcelain can be set to generally range from 1 × 10⁶ (cP) to 3 × 10⁷ (cP).

Where the substrate is constituted by ceramic (e.g., zirconia), it is preferable that the first porcelain is constituted by material (composition) forming a ceramic body whose coefficient of thermal expansion is close to that of the ceramic constituting the substrate. It is preferable that the viscosity of the first porcelain is set to range from 8 × 10⁶ (cP) to 3 × 10⁷ (cP) and that the viscosity of the second porcelain is set to range from 2 × 10⁶ (cP) to 7 × 10⁶ (cP). It is more preferable that the viscosity of the first porcelain is set to range from 8 × 10⁶ (cP) to 1.5 × 10⁷ (cP) and that the viscosity of the second porcelain is set to range from 3 × 10⁶ (cP) to 7 × 10⁶ (cP).

Where the substrate is constituted by noble metal or other metal, it is preferable that the first porcelain is constituted by material (composition) forming a ceramic body whose coefficient of thermal expansion is close to that of the metal constituting the substrate. It is preferable that the viscosity of the first porcelain is set to range from 1.3 × 10⁷ (cP) to 5 × 10⁷ (cP) and that the viscosity of the second porcelain is set to range from 1 × 10⁶ (cP) to 1.2 × 10⁷ (cP). It is more preferable that the viscosity of the first porcelain is set to range from 1.3 × 10⁷ (cP) to 3 × 10⁷ (cP) and that the viscosity of the second porcelain is set to range from 5 × 10⁶ (cP) to 1.2 × 10⁷ (cP).

The form of the second porcelain upon its use (casting) is not particularly limited. For example, it is possible to advantageously use an ingot constituted by the glass composition (that can be crystallized glass) having the above-descried composition. Such a glass ingot can be obtained by any conventionally known means. For example, the glass ingot can be obtained by crushing and mixing ceramic materials constituting components of the desired glass composition, heating and melting the mixture, filling a mold having a desired size with the molten mixture, and cooling the mixture.

Alternatively, the second porcelain may take the form of powders constituted principally by ceramic powders.

As a method of pouring the second porcelain into the casting mold, it is possible to soften the porcelain by heating it, and then pressing the softened porcelain. This method is suitable for a case with use of the glass ingot. A suitable length of time for which the material is heated to be softened is commonly not shorter than five minutes and not longer than three hours. It can be not shorter than ten minutes and not longer than one hour. The pressing operation can be achieved with pressure of about 0.1-5 (MPa), typically with pressure of about 0.1-1 (MPa). The heating temperature may be a temperature enabling ceramic contained in the porcelain, to be softened. It can be set within commonly a range of 400-1500 (°C), typically a range of 600-1300 (°C), and preferably a range of 800-1200 (°C).

The casting temperature can be suitably determined depending upon, for example, the composition of the used second porcelain and the configuration of the formed cast coating layer, as long as the casting temperature is held within a range, within which it is determined depending upon material in a conventionally known casting process practiced in dentistry. The casting temperature is set within commonly a range of 600-1500 (°C), typically a range of 800-1300 (°C), and preferably a range of 900-1200 (°C).

The cooling operation may be initiated immediately after completion of the casting of the second porcelain. However, for increasing the formability of the coating layer, it is preferable that the temperature of the second porcelain is held within the range of the casting temperature for a predetermined length of time (for example, ranging from five minutes to one hour, preferably ranging from five minutes to thirty minutes), after completion of the casting.

For establishing a desired color tone and transparency, the cast coating layer may be formed on any portion of the surface of the back coating layer. For example, the cast coating layer may be formed to cover substantially an entirety of the surface of the back coating layer, or formed only on a part of the surface of the back coating layer. It is preferable that it is formed to cover substantially an entirety of the surface of the back coating layer, so that the color tone of the cast coating layer cooperates with that of the back coating layer to obtain an appearance closer to that of a natural tooth.

The configuration and thickness of the cast coating layer may vary depending upon content of the dental prosthesis, and are suitably determined such that desired color tone and transparency are established. For example, where the desired prosthesis is crown, the thickness of the casting coating layer can be typically about 1-3 (mm) as measured in a portion in which the thickness is maximized.

After completion of the casting, typically, the casting coat layer is cooled while being held within the casting mold, and the formed casting coat layer is extracted together with the substrate, out of the casting mold. Means for extracting is not particularly limited. Where the casting mold is formed of a standard hardenable investment material, the extraction can be made by breaking the casting mold. Alternatively, the extraction can be made by opening the casting mold, where the casting mold is formed to be selectively openable and closable.

For further improving the beauty, one or at least two coating layers may be additionally formed on a surface of the formed cast coating layer. Such an additional coating layer or layers may be formed by applying (mounting) a porcelain with use of a brush as described above, or by practicing a casting process as described above. Where the additional coating layer or layers are formed by the casting process, it is preferable that the additional coating layer or layers are formed by using a porcelain (third porcelain) whose viscosity is still lower than that of the second porcelain forming the cast coating layer (that can be regarded as a back coating layer) that has been formed earlier, in substantially the same manner as in the above-described manufacturing method.

Next, the kit of the second invention will be explained. The first and second materials included in the kit disclosed herein are not particularly limited, as long as they are constituted to be capable of preparing the first and second porcelains which establish the difference in viscosity as explained in the above-described manufacturing method.

The first material included in the kit has, as its main component, the ceramic by which the first porcelain (explained in the above-described manufacturing method) is principally constituted. Typically, such a ceramic included in the first material takes the form of powders. The first material may contain other additive (e.g., pigment) as desired. Further, the kit may include a dispersion medium (water or the like) suitable for preparing slurry (paste) of the porcelain, such that the dispersion medium is separated from or mixed with the ceramic powders. It is also possible that the first material included in the kit is provided by any one of the forms of the first porcelain that are explained in the above-described manufacturing method.

On the other hand, the second material included in the kit has, as its main component, the ceramic by which the second porcelain (explained in the above-described manufacturing method) is principally constituted. Typically, such a ceramic included in the second material takes the form of powders. The second material may contain other additive (e.g., pigment) as desired.

Instead, the kit may include, as the second material, an ingot formed of the ceramic by which the second porcelain is principally constituted. It is also possible that the second material included in the kit is provided by any one of the forms of the second porcelain that are explained in the above-described manufacturing method.

### BRIEF DESCRIPTION OF DRAWINGS

[Fig. 1] A schematic view for explaining a stage of a method of manufacturing a tooth crown according to an embodiment of the present invention, and showing a cross section of a frame used for manufacturing the tooth crown.
[Fig. 2] A view for explaining a stage following the stage of Fig. 1, and showing a state in which a backing layer (back coating layer, i.e., first ceramic layer) is formed on a surface of the frame.
[Fig. 3] A view for explaining a stage following the stage of Fig. 2, and showing a state in which a model layer is formed on a surface of the backing layer.
[Fig. 4] A view for explaining a stage following the stage of Fig. 3, and showing a state in which the frame (on which the backing layer and the model layer have been formed) is attached to a pedestal.
[Fig. 5] A view for explaining a stage following the stage of Fig. 4, and showing a state in which a dental investment material is poured inside a casting ring disposed on the pedestal.
[Fig. 6] A view for explaining a stage following the stage of Fig. 5, and showing a state in which there is prepared a casting mold having a void portion that is formed as a result of burnout of the model layer.
[Fig. 7] A view for explaining a stage following the stage of Fig. 6, and showing a dental crown in which a coat layer (cast coating layer, i.e., second ceramic layer) is formed on the surface of the backing layer.
[Fig. 8] A process drawing for explaining a method of manufacturing a ceramic layer used for manufacturing a prosthesis according to another embodiment of the present invention.
[Fig. 9] A schematic view for explaining a stage of a method of manufacturing a bridge according to a still another embodiment of the present invention, and showing a state of a missing tooth.
[Fig. 10] A view for explaining a stage following the stage of Fig. 9, and showing the stage in which abutment teeth are formed so that the bridge is mounted on the abutment teeth.
[Fig. 11] A view for explaining a stage following the stage of Fig. 10, and showing a frame prepared in a position that is to be compensated.
[Fig. 12] A view for explaining a stage following the stage of Fig. 11, and showing the stage in which a first ceramic layer is formed on a surface of the frame.
[Fig. 13] A view for explaining a stage following the stage of Fig. 12, and showing a state in which a model layer is formed on a backing layer and is set on a former.
[Fig. 14] A view for explaining a stage following the stage of Fig. 13, and showing a state in which a coat layer is formed.
[Fig. 15] A view showing a cross section of a pontic of the bridge, taken along line 15-15 in Fig. 14.

### EXPLANATION OF REFERENCE SIGN

10: frame, 12: surface, 14: first ceramic layer (backing layer, back coating layer), 16: surface, 18: void portion, 20: model layer, 22: pin, 24: porcelain introducing passage, 26: pedestal, 28: casting ring, 30: dental investment, 32: casting mold, 34: ceramic holding portion, 36: second ceramic layer (coating layer, cast coating layer), 38: dental crown (dental prosthesis), 40: upper jaw, 42: missing tooth, 44, 46: tooth, 48, 50: abutment tooth, 52: frame, 54, 56, 58: core element, 60: first ceramic layer, 62: model layer, 64: former, 66: second ceramic layer, 68: bridge, 70: pontic

### BEST MODE FOR CARRYING OUT THE INVENTION

Hereinafter examples of the present invention will be explained in detail with reference to the drawings. It is noted that the following examples are illustrated in the drawings in simplified or modified manner, as needed, and that a ratio of dimensions and a configuration of each component are not necessarily accurately illustrated. Further, through the following examples, it is not intended that the present invention is limited to what are shown in the examples.

### < Example 1>

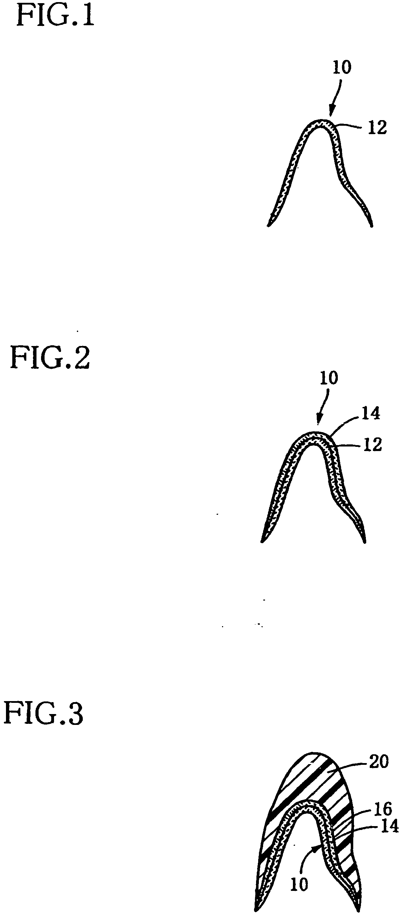

Figs. 1 - 7 are schematic views for explaining a method of manufacturing a dental crown 38 as an example of a dental prosthesis according to an example of the first and second inventions. The crown 38 is to be mounted, for example, as a front tooth of an upper jaw of an adult. The present invention is applicable also to all other teeth. In Fig. 1, the frame 10 made of zirconia (single crown frame) produced separately is prepared. This frame 10 made of zirconia is produced by conventionally known means, for example, forming a denture mold with plaster and pouring the zirconia into the denture mold.

First, a first porcelain was uniformly applied (mounted) with a brush, onto a surface 12 of the above-described frame 10 made of the zirconia, such that the first porcelain had a thickness of about 0.1 (mm). The first porcelain used herein is slurry including ceramic powders of composition indicated in Table 1 given below and prepared by mixing 100 mass parts of propyleneglycol-water solution to 100 mass parts of the ceramic powders.

After being mounted, the first porcelain was burned at 1050 (°C), so that a back coating layer 14 was formed on an entirety of the surface 12 of the frame 10 as shown in Fig. 2.

**[Table 1]**

| | | FIRST PORCELAIN | SECOND PORCELAIN |
|---|---|---|---|
| MATERIAL COMPOSITION (Mass %) | SiO₂ | 68.7 | 65.0 |
| | Al₂O₃ | 14.0 | 16.0 |
| | K₂O | 9.0 | 10.0 |
| | Ns₂O | 5.0 | 5.0 |
| | Li₂O | 0.8 | 0.3 |
| | ZrO₂ | 3.0 | -- |
| | B₂O₃ | -- | 1.0 |
| | CaO | -- | 1.0 |
| | CeO₂ | -- | 0.7 |
| | MgO | -- | 1.0 |
| VISCOSITY AT CASTING TEMPERATURE | | 9 × 10⁸ (cP) | 5.5 × 10⁶ (cP) |

Subsequently, as shown in Fig. 3, a model layer 20 having a desired shape of the crown was formed, by using a dental wax (e.g., "Blue Inlay Wax" manufactured by GC Corporation), on a surface 16 of the obtained back coating layer 14.

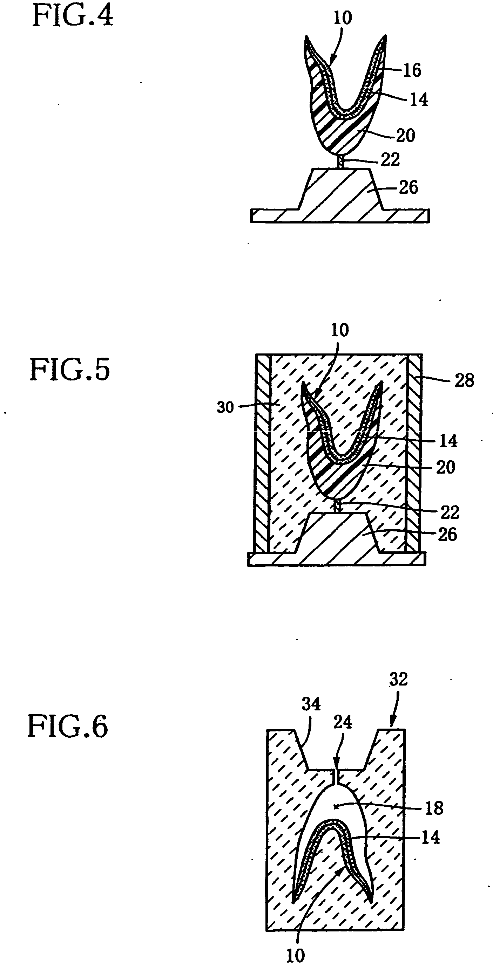

Then, as shown in Fig. 4, a pin 22 called a sprue line (e.g., "Ready Casting Wax" manufactured by GC Corporation) was attached to the model layer 20, and the sub-assembly was transferred to a pedestal 26. Further, as shown in Fig. 5, a casting ring 28, which is typically made of a metal or a rubber, was disposed on the pedestal 26. Then, a dental investment material 30 (e.g., "Cergo fit SPEED" manufactured by DeguDent Company) that is hardenable at normal temperature was poured inside the casting ring 28, so that the model layer 20 together with the frame 10 was embedded in the investment material 30.

After the investing material 30 had been hardened, the pin 22 and the pedestal 26 were removed, and a hardened body constituted by the investment material 30 inside which the frame 10 was disposed was transferred into an electric furnace. The hardened body was heated to 850 (°C) in the furnace, and was held at the temperature for one hour, so that the model layer 20 was burned to be eliminated, whereby a casting mold 32 was prepared. In the prepared casting mold 32, there was a void portion 18 provided by a portion in which the eliminated model layer had been present.

Subsequently, a glass composite (powders) as a second porcelain having composition indicated in Table 1, which had been crystallized by a heat-treatment, were installed in a die and pressed by a plunger. After that, the glass composite was heated and then gradually cooled, so as to be preliminarily formed to have a columnar shape.

This glass ingot was disposed, together with a plunger (not shown) operable to press the glass ingot into the casting mold 32, in a ceramic holding portion (portion in which the pedestal had been present) 34 of the casting mold 32. Then, the thus disposed glass ingot was set in a hot press furnace (type: EP500 manufactured by Ibokura Co. Ltd.). The glass ingot was heated to 1050 (°C) in the hot press furnace, and was held at the temperature for 20 minutes. After that, the softened ingot (i.e., second porcelain) was pressed by the plunger with a pressure of about 0.5 (MPa) acting in a direction toward the casting mold 32. By this operation, the second porcelain of molten state was poured into the casting mold through a porcelain introducing passage 24 (i.e., portion in which the pin 22 had been present), so that the void portion 18 was filled with the second porcelain.

Viscosities of the first and second porcelains in this instance, i.e., at the casting temperature (1050 (°C)) are indicated in Table 1. It is noted that, in this Example, the viscosities were measured by a high temperature viscometer with parallel plates (type: PPVM-1350) available from NEWMAN-TECH CORP.

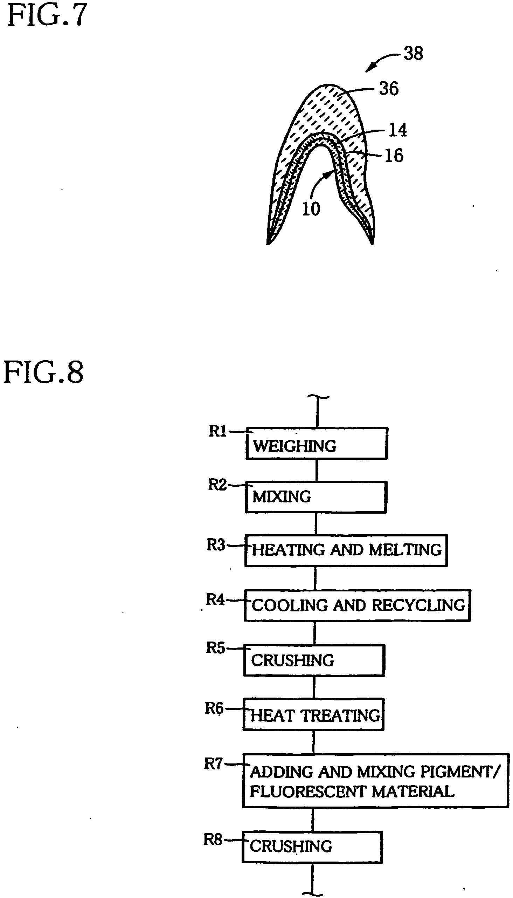

After the second porcelain had been filled in the void portion 18 within the casting mold 32, the second porcelain was held at 1050 (°C) for another ten minutes, and then cooled. After the second porcelain had been cooled completely, the casting mold 32 was broken, and a crown 38 was taken out. By the above processing, there was obtained the crown 38 in which a cast coating layer 36 was formed on the surface 16 of the back coating layer 14, as shown in Fig. 7.

In a visual observation of a cross section obtained by cutting the crown 38, it was confirmed that the back coating layer 14 covered an entirety of the frame 10 while a thickness of the back coating layer 14 was held substantially at its designed value without movement and deformation of the back coating layer 14. Further, the crown 38 had an appearance close to that of a natural tooth.

### < Examples 2-10>

In each of these examples, a dental crown having the same configuration as Example 1 was manufactured in the same manner as in Example 1, except that the second porcelain in the form of ceramic powders having composition indicated in Table 2 was used and that viscosity of the second porcelain at the casting temperature was as indicated in Table 2. It is noted that "VISCOSITY" in Table 2 indicates a value at the casting temperature.

**[Table 2]**

| No. | SiO₂ | Al₂O₃ | K₂O | Na₂O | Li₂O | B₂O₃ | CaO | CeO₂ | Mg0 | Sb₂O₃ | ZrO₂ | VISCOSITY (cP) |
|---|---|---|---|---|---|---|---|---|---|---|---|---|
| 2 | 64.3 | 15.8 | 9.9 | 5.9 | 0.3 | 0.1 | 1.0 | 0.7 | 1.0 | 1.0 | -- | 4.5 × 10⁶ |
| 3 | 62.6 | 17.8 | 9.7 | 4.9 | 0.3 | 1.0 | 1.0 | 0.7 | 1.0 | 1.0 | -- | 5.0 × 10⁶ |
| 4 | 63,9 | 15.8 | 9.9 | 4.9 | 0.3 | 1.0 | 1.0 | 0.7 | 1.0 | 1.0 | 0.5 | 5.3 × 10⁶ |
| 5 | 64.7 | 16.0 | 10.0 | 5.0 | 0.3 | 1.0 | 1.0 | -- | 1.0 | 1.0 | -- | 5.4 × 10⁶ |
| 6 | 64.3 | 16.2 | 10.6 | 4.8 | 0.2 | 0.8 | 1.2 | 0.8 | 0.1 | 1.0 | -- | 6.3 × 10⁶ |
| 7 | 65.4 | 15.2 | 10.5 | 4.8 | 0.4 | 0.8 | 1.0 | 0.8 | 0.1 | 1.0 | -- | 6.4 × 10⁶ |
| 8 | 66.7 | 16.0 | 9.0 | 4.5 | 0.3 | 1.0 | 1.5 | -- | 1.0 | 1.0 | -- | 7.2 × 10⁶ |
| 9 | 66.0 | 15.9 | 10.0 | 4.5 | 0.1 | 0.8 | 0.7 | 0.8 | 0.2 | 1.0 | -- | 7.5 × 10⁶ |
| 10 | 66,6 | 16.4 | 9.2 | 4.1 | 0.1 | 0.8 | 0.5 | 0.8 | 0.5 | 1.0 | -- | 8.6 × 10⁶ |

| | | | | | | | | | | | | |
|---|---|---|---|---|---|---|---|---|---|---|---|---|
| (Indicating composition of second porcelain used in each Example: (mass %)) | | | | | | | | | | | | |

As is apparent from Table 2, in all of Examples, the viscosity (9 × 10⁶ (cP)) of the first porcelain (forming the back coating layer) at the casting temperature was higher than the viscosity (from 4.5 × 10⁶ to 8.5 × 10⁶ (cP)) of the second porcelain (forming the cast coating layer) at the casting temperature. Therefore, as in Example 1, it was confirmed that the back coating layer covered an entirety of the frame with its thickness being substantially constant, without notable movement and deformation of the back coating layer after the casting. Further, the obtained crown had an appearance close to that of a natural tooth.

Particularly, in Examples 2, 3, 4 and 5, the viscosity (9 × 10⁶ (cP)) of the first porcelain (forming the back coating layer) was at least 1.5 times as high as the viscosity (from 5 × 10⁶ to 6 × 10⁶ (cP)) of the second porcelain (forming the cast coating layer). Thus, any movement and deformation of the back coating layer were not confirmed at all. Further, the obtained crown had an excellent appearance as that of a natural tooth.

### <Example 11>

In this Example, a frame made of a metal was used as the substrate. The metal frame is constituted by 78 (mass %) of Au, 7.1 (mass %) of Pt, 9.8 (mass %) of Pd, 2.4 (mass %) of Ag and inevitable impurity.

Further, in this Example, a back coating layer was formed in the same manner as in Example 1, except that the first porcelain used herein included ceramic powders of composition indicated in Table 3 in place of the composition indicated in Table 1 and that a burning temperature of the back coating layer was 980 (°C).

**[Table 3]**

| | | FIRST PORCELAIN | SECOND PORCELAIN |
|---|---|---|---|
| MATERIAL COMPOSITION (Mass %) | SiO₂ | 47.7 | 64.5 |
| | Al₂O₃ | 14.0 | 14.3 |
| | K₂O | 10.0 | 10.0 |
| | Na₂O | 6.0 | 9.0 |
| | Li₂O | 0.3 | 0.3 |
| | ZrO₂ | -- | 0.5 |
| | CaO | 1.0 | 1.0 |
| | MgO | 1.0 | 0.4 |
| | SnO₂ | 20.0 | -- |
| VISCOSITY AT CASTING TEMPERATURE | | 1.5 × 10⁷ (cP) | 1 × 10⁷ (cP) |

Subsequently, a cast coating layer was formed in the same manner as in Example 1, except that the second porcelain used herein included ceramic powders of composition indicated in Table 3 in place of the ceramic powders of the composition indicated in Table 1, that a burning temperature of the back coating layer was 980 (°C), and that the length of time for which the burning temperature was held was changed from 20 minutes to 15 minutes. It is noted that viscosities of the first and second porcelains at the casting temperature were as indicated in Table 3.

In a visual observation of a cross section obtained by cutting the crown, any movement and deformation of the back coating layer were not confirmed at all, since the viscosity (1.5 × 10⁷ (cP)) of the first porcelain (forming the back coating layer) was at least 1.5 times as high as the viscosity (1 × 10⁷ (cP)) of the second porcelain (forming the cast coating layer). Further, the obtained crown had an excellent appearance as that of a natural tooth.

### < Examples 12-19>

In each of these examples, a dental crown was manufactured in the same manner as in Example 11, except that the second porcelain in the form of ceramic powders having composition indicated in Table 4 was used and that viscosity of the second porcelain at the casting temperature was as indicated in Table 4. It is noted that "VISCOSITY" in Table 4 indicates a value at the casting temperature.

**[Table 4]**

| No. | SiO₂ | Al₂O₃ | K₂O | Na₂O | Li₂O | B₂O₃ | CaO | ZrO₂ | MgO | Sb₂O₃ | VISCOSITY (cP) |
|---|---|---|---|---|---|---|---|---|---|---|---|
| 12 | 62.6 | 13.9 | 9.7 | 11.7 | 0.2 | -- | 1.0 | 0.5 | 0.4 | -- | 0.6 × 10⁷ |
| 13 | 64.5 | 14.6 | 9.6 | 9.2 | 0.4 | -- | 0.8 | -- | 0.1 | 0.8 | 1.18 × 10⁷ |
| 14 | 64.5 | 14.3 | 10.0 | 8.5 | 0.3 | 0.5 | 1.0 | 0.6 | 0.4 | -- | 1.2 × 10⁷ |
| 15 | 64.9 | 14.6 | 8.6 | 8.6 | 0.4 | -- | 2.1 | -- | 0.1 | 0.8 | 1.25 × 10⁷ |
| 16 | 64.4 | 14.3 | 9.6 | 9.1 | 0.4 | -- | 0.8 | 0.6 | 0.1 | 0.8 | 1.26 × 10⁷ |
| 17 | 64.8 | 14.6 | 8.7 | 9.7 | 0.4 | -- | 0.8 | -- | 0.1 | 0.9 | 1.27 × 10⁷ |
| 18 | 64.8 | 14.6 | 9.4 | 9.8 | 0.4 | -- | 0.1 | -- | 0.1 | 0.8 | 1.80 × 10⁷ |
| 19 | 66.9 | 16.6 | 7.2 | 8.0 | 1.0 | -- | 0.7 | -- | 0.1 | 0.6 | 1.48 × 10⁷ |

| | | | | | | | | | | | |
|---|---|---|---|---|---|---|---|---|---|---|---|
| (Indicating composition of second porcelain used in each Example: (mass %)) | | | | | | | | | | | |

As is apparent from Table 4, in all of Examples, since the viscosity (1.5 × 10⁷ (cP)) of the first porcelain (forming the back coating layer) at the casting temperature was higher than the viscosity (from 0.6 × 10⁷ to 1.48 × 10⁷ (cP)) of the second porcelain (forming the cast coating layer) at the casting temperature, the back coating layer covered an entirety of the frame with its thickness being substantially constant, with little movement and deformation of the back coating layer. Further, the obtained crown had an appearance close to that of a natural tooth. Particularly, in the crown of Example 12, since the viscosity (1.5 × 10⁷ (cP)) of the first porcelain (forming the back coating layer) was at least twice as high as the viscosity (0.6 × 10⁷ (cP)) of the second porcelain (forming the cast coating layer), movement and deformation of the back coating layer were effectively prevented. The obtained crown of Example 12 had an excellent appearance close to that of a natural tooth.

### < Comparative Example 1>

A dental crown was manufactured in the same manner as in Example 1, except that the first porcelain in the form of ceramic powders having composition indicated in Table 5 was used and that viscosity of the first porcelain at the casting temperature 1050 (°C) was as indicated in Table 5.

**[Table 5]**

| | | FIRST PORCELAIN |
|---|---|---|
| MATERIAL COMPOSITION (Mass %) | SiO₂ | 65.7 |
| | Al₂O₃ | 11.0 |
| | K₂O | 8.0 |
| | Na₂O | 7.0 |
| | Li₂O | 0.3 |
| | ZrO₂ | 5.0 |
| | CaO | 1.0 |
| | B₂O₃ | 1.0 |
| | CeO₂ | 1.0 |
| VISCOSITY AT CASTING TEMPERATURE | | 1 × 10⁸ (cP) |

In a visual observation of a cross section obtained by cutting the crown, it was confirmed that the back coating layer was moved together with the poured second porcelain and was exposed in a frame opening portion (margin portion), since the viscosity (1 × 10⁶ (cP)) of the first porcelain (forming the back coating layer) was lower than the viscosity (5.5 × 10⁶ (cP)) of the second porcelain (forming the cast coating layer). Further, the thickness of the back coating layer is increased as viewed in a direction toward the margin portion, so that unevenness of the color occurred.

### < Comparative Example 2>

A dental crown was manufactured in the same manner as in Example 2, except that the first porcelain in the form of ceramic powders having composition indicated in Table 6 was used and that viscosity of the first porcelain at the casting temperature 960 (°C) was as indicated in Table 6.

**[Table 6]**

| | | FIRST PORCELAIN |
|---|---|---|
| MATERIAL COMPOSITION (Mass %) | SiO₂ | 45.7 |
| | Al₂O₃ | 13.0 |
| | CaO | 1.0 |
| | K₂O | 10.0 |
| | Na₂O | 10.0 |
| | Li₂O | 0.3 |
| | SnO₂ | 20.0 |
| VISCOSITY AT CASTING TEMPERATURE | | 1 × 10⁶ (cP) |

In a visual observation of a cross section obtained by cutting the crown, it was confirmed that the back coating layer was moved together with the poured second porcelain and was exposed in a frame opening portion (margin portion), since the viscosity (1 × 10⁶ (cP)) of the first porcelain (forming the back coating layer) was lower than the viscosity (1 × 10⁷ (cP)) of the second porcelain (forming the cast coating layer). Further, the thickness of the back coating layer is increased as viewed in a direction toward the margin portion, so that unevenness of the color occurred.

### <Reference Example 20 >

Next, there will be explained Reference Example. Since the dental crown 38 manufactured in this Reference Example is substantially the same as that shown in Figs. 1-7, differences will be principally explained with reference to Figs. 1-7.

In this Reference Example, a first porcelain shown in Table 7 given below was prepared in place of the above-described first porcelain, and the prepared first porcelain was uniformly applied (mounted) with a brush, onto the surface 12 of the above-described frame 10 made of the zirconia, such that the first porcelain had a thickness of about 0.2 (mm). The first porcelain used herein is slurry including ceramic powders of composition indicated in Table 7 given below and prepared by mixing 100 (wt parts) of propyleneglycol-water solution to 100 (wt parts) of the ceramic powders. After being mounted, the first porcelain was burned at 1050 (°C), so that a first ceramic layer (i.e., back coating layer) 14 was formed on an entirety of the surface 12 of the frame 10 as shown in Fig. 2.

**[Table 7]**

| | | FIRST PORCELAIN | SECOND PORCELAIN |
|---|---|---|---|
| MATERIAL COMPOSITION (Mass %) | SiO₂ | 67.5 | 64.2 |
| | Al₂O₃ | 15.9 | 15.9 |
| | Li₂O | 0.1 | 0.1 |
| | Na₂O | 4.8 | 4.7 |
| | K₂O | 10.0 | 10.0 |
| | CaO | 0.3 | 0.7 |
| | MgO | 0.2 | 0.7 |
| | Sb₂O₃ | 0.2 | 1.0 |
| | CeO₂ | 0 | 0.7 |
| | B₂O₃ | 0 | 1.2 |
| | ZrO₂ | 1.0 | 0 |
| COEFFICIENT OF THERMAL EXPANSION(/°C) | | 9.8 x 10⁻⁶ | 9.6 × 10⁻⁶ |

The first porcelain was composed, for example, in accordance with a manufacturing process shown in Fig. 8. That is, in weighing step R1, compounds for forming oxide at a glass melting temperature within a range of 1000-1500 (°C), for example, is weighed. In mixing step R2, the compounds are mixed by using ball mill, Ishikawa-type crusher or the like. Subsequently, after the mixture has been heated at 1000 (°C) or higher in an atmosphere so as to be melted in heating and melting step R3, the molten mixture is cooled and recycled in cooling and recycling step R4. Subsequently, in crushing step R5, the mixture is further crushed by using ball mill, planetary mill or the like. Subsequently, in a heat treating step R6, the crushed material is subjected to a heat treatment that is carried out, for example, at a temperature within a range of 800-1100 (°C) for about 30-60 minutes. As a result of this, there is precipitated leucite crystal. By controlling this, it is possible to adjust coefficient of thermal expansion. Subsequently, in pigment/fluorescent material adding and mixing step R7, the material is mixed with pigment and fluorescent material by using ball mill, Isbikawa-type crusher or the like. In crushing step R8 following step R7, the mixture is crushed whereby the first porcelain is obtained. The material used herein is suitably selected among various materials that are sources of supplying the above-described elements. In the porcelain, fluorescent material and pigment are included, in addition to the above-described main components.

Subsequently, as shown in Fig. 3, the model layer 20 was formed on the surface 16 of the obtained first ceramic layer 14, and the casting mold 32 was formed as in the same manner as in the above-described Example 1 in accordance with Figs. 4-6. It is noted that, in this Example, the heating temperature for burning and removing the model layer 20 is about 800 (°C), for example.

Subsequently, glass powders as a second porcelain having composition indicated in Table 7 were prepared, and a glass composite (powders) which had been crystallized as in the same manner as in the above-described Example 1 was composed. Further, the glass composite was formed, by using a mold pressing mashine or the like, into a columnar shape having a diameter of about 10 (mm) and a height of about 10 (mm), for example. After that, the glass composite was subjected to a burning treatment at temperature of about 1050 (°C) and then gradually cooled, whereby a columnar-shaped glass ingot was obtained. This glass ingot, as in the above-described Example 1, was mounted in the ceramic holding portion 34 of the casting mold 32, and was heated in a hot press furnace so as to be softened. The ingot of molten state, i.e., the second porcelain was poured into the casting mold, so that the void portion 18 was filled with the second porcelain. In this instance of the pouring, viscosity of the second porcelain, i.e., the second ceramic layer (i.e., coating layer) 36 was 1 × 10⁷ (cP), which was sufficiently higher than 5 × 10⁶ (cP) that is viscosity of the first ceramic layer 14 at the same temperature.

The second porcelain poured into the casting mold as described above was cooled. After the second porcelain had been cooled completely, the casting mold 32 was broken, and the crown 38 was taken out. By the above processing, like in the above-described Examples, there was obtained the crown 38 in which the second ceramic layer 36 was formed on the surface 16 of the first ceramic layer 14, as shown in Fig. 7. In an observation of a surface of the obtained crown 38, it was confirmed that the crown was given a desired configuration without any crack. Further, the crown 38 had an appearance close to that of a natural tooth. Commonly, a third ceramic layer formed of a porcelain having a still higher transparency is disposed on a part or entirety of the surface of the second ceramic layer 36, so that the appearance of the crown becomes closer to that of a natural tooth. However, the provision of the third ceramic layer is not indispensable, and it is omitted in Fig. 7.

That is, according to the present Reference Example, the composition used as the first porcelain for forming the first ceramic layer 14 contains 67.5 (mass %) of SiO₂, 15.9 (mass %) of Al₂O₃, 0.1 (mass %) of Li₂O, 4.8 (mass %) of Na₂O, 10.0 (mass %) of K₂O, 0.3 (mass %) of CaO, 0.2 (mass %) of MgO, 0.2 (mass %) of Sb₂O₃ and 1.0 (mass %) of ZrO₂, while the composition used as the second porcelain for forming the second ceramic layer 36 on the first ceramic layer 14 contains 64.2 (mass %) of SiO₂, 15.9 (mass %) of Al₂O₃, 0.1 (mass %) of Li₂O, 4.7 (mass %) of Na₂O, 10.0 (mass %) of K₂O, 0.7 (mass %) of CaO, 0.7 (mass %) of MgO, 1.0 (mass %) of Sb₂O₃, 0.7 (mass %) of CeO₂ and 1.2 (mass %) of B₂O₃. Thus, since either of the first and second porcelains have coefficient of thermal expansion substantially the same as that of the frame 10 made of zirconia, it is possible to restrain occurrence of crack thereof in the process of cooling in the heat treatment. Further, at the same temperature, the viscosity of the first ceramic layer 14 earlier formed on the lower side is higher than the viscosity of the second ceramic layer 36 formed on the first ceramic layer 14, so that it is possible to restrain the earlier formed first ceramic layer 14 from being softened to be caused to flow and deform when the second ceramic layer 36 is fixedly formed on the first ceramic layer 14. The second porcelain was prepared with state of powders in place of the glass ingot as described above. The thus prepared second porcelain was disposed on the first ceramic layer 14 in the same manner as the first porcelain and was then subjected to a burning treatment at temperature of about 930 (°C), for example. Substantially the same crown 38 was obtained also by such a manufacturing method. It was confirmed that the obtained crown 38 had a desired configuration without any crack on its surface.

### < Comparative Example 3 >

There will be explained results of tests in which conventional porcelains were used in place of the above-described first and second porcelains.

First, on the frame 10 made of zirconia, third and fourth porcelains of Table 8 given below, which had been conventionally used for a metal frame, were sequentially mounted and subjected to respective burning treatments. The third porcelain constituting the backing layer was burned at temperature of about 960 (°C), while the fourth porcelain constituting the coating layer was burned at temperature of about 930 (°C). In an observation of appearance of the obtained crown after it had been cooled, there were confirmed cracks on the ceramic layers (i.e., the backing and coating layers). In the porcelains, fluorescent material and pigment are included, in addition to the below-described main components.

**[Table 8]**

| | | THIRD PORCELAIN | FOURTH PORCELAIN |
|---|---|---|---|
| MATERIAL POMPOSITION (Mass %) | SiO₂ | 52.2 | 65.6 |
| | Al₂O₃ | 11.6 | 14.6 |
| | Li₂O | 0.3 | 0.4 |
| | Na₂O | 7.5 | 9.3 |
| | K₂O | 7.1 | 8.8 |
| | CaO | 0.6 | 0.7 |
| | MgO | 0.5 | 0.6 |
| | SnO₂ | 20.0 | 0 |
| COEFFICIENT OF THERMAL EXPANSION(/°C) | | 12.3 × 10⁻⁶ | 12.3 × 10⁻⁶ |

### < Comparative Example 4 >

Next, on the frame 10 made of zirconia, fifth and sixth porcelains of Table 9 given below, which had been conventionally used for an alumina frame, were sequentially disposed and subjected to respective burning treatments. The fifth porcelain constituting the backing layer and the sixth porcelain constituting the coating layer were burned at temperature of about 960 (°C). In an observation of appearance of the obtained crown after it had been cooled, there were confirmed cracks on the frame 10. In the porcelains, fluorescent material and pigment are included, in addition to the below-described main components.

**[Table 9]**

| | | FIFTH PORCELAIN | SIXTH PORCELAIN |
|---|---|---|---|
| MATERIAL COMPOSITION (Mass %) | SiO₂ | 74.0 | 75.3 |
| | Al₂O₃ | 8.6 | 9.5 |
| | Li₂O | 0.3 | 0.4 |
| | Na₂O | 5.7 | 6.3 |
| | K₂O | 5.0 | 5.5 |
| | CaO | 0.6 | 0.7 |
| | MgO | 0.5 | 0.5 |
| | ZrO₂ | 2.7 | 0 |
| | CeO₂ | 0 | 1.1 |
| COEFFICIENT OF THERMAL EXPANSION(/°C) | | 6.8 × 10⁻⁶ | 6.8 × 10⁻⁶ |

### <Reference Example 21 >

Next, there will be explained other Reference Examples.

While there have been explained cases where the present invention is applied to the single crown the above-described Example, the dental prosthesis manufactured by the manufacturing method of the Reference Examples can be advantageously applied also to a bridge for replacing teeth including a molar tooth, since the zirconia frame 10 having high strength is used in the dental prosthesis.

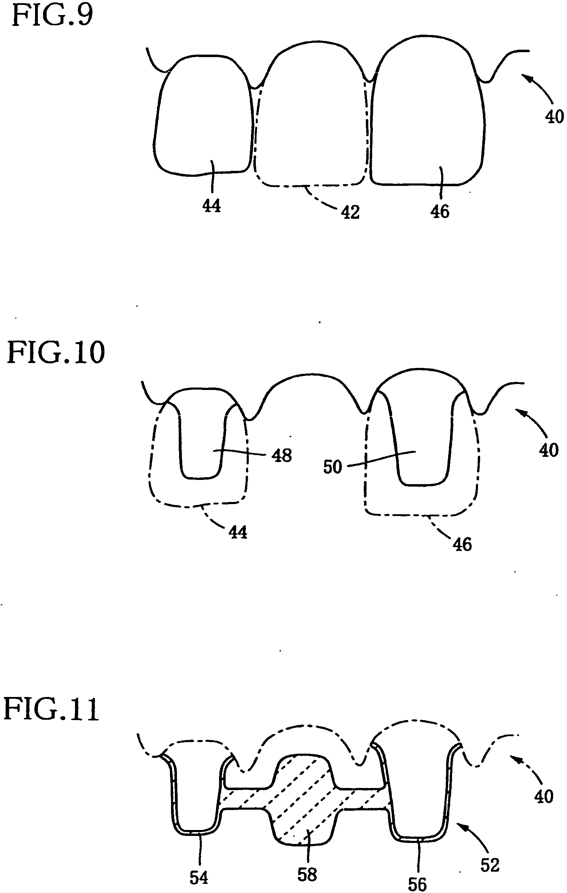

Fig. 9-15 are views for explaining a method of manufacturing a three-teeth bridge 68 for substituting an adult molar tooth as a missing tooth. Fig. 9 shows a main portion of an upper jaw 40 in which one tooth is missed. In Fig. 9, the missing tooth 42 is indicated by one-dot chain line in a center of the figure. Fig. 10 shows a stage in which abutment teeth 48, 50 are formed by grinding teeth 44, 46 that are located on opposite sides of the missing tooth 42. The subsequent step is implemented to prepare a frame (three-teeth bridge frame) 52 made of zirconia and having an inner contour that is slightly larger than an outer contour of the formed abutment teeth 48, 50. Fig. 11 shows a cross section of the prepared frame 52. The preparation of the frame 52 is made by CAD/CAM method or the like in which configuration of the upper jaw 40 having the abutment teeth 48, 50 formed therein is measured and a ceramic block is machined into a desired configuration. The frame 52 consists of core elements (i.e., frames of so-called copying portions) 54, 56 corresponding to the respective abutment teeth 48, 50, and a core element (i.e., frame of a so-called pontic portion) 58 corresponding to the missing tooth 42, wherein the core elements 54, 56 are connected to the core element 58.

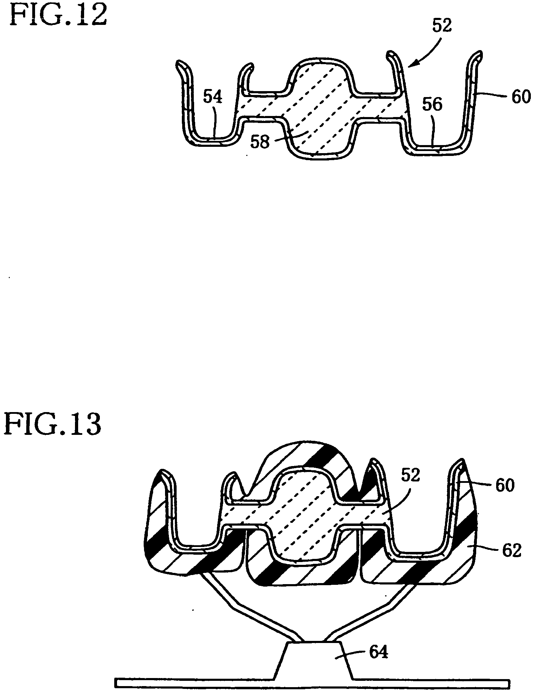

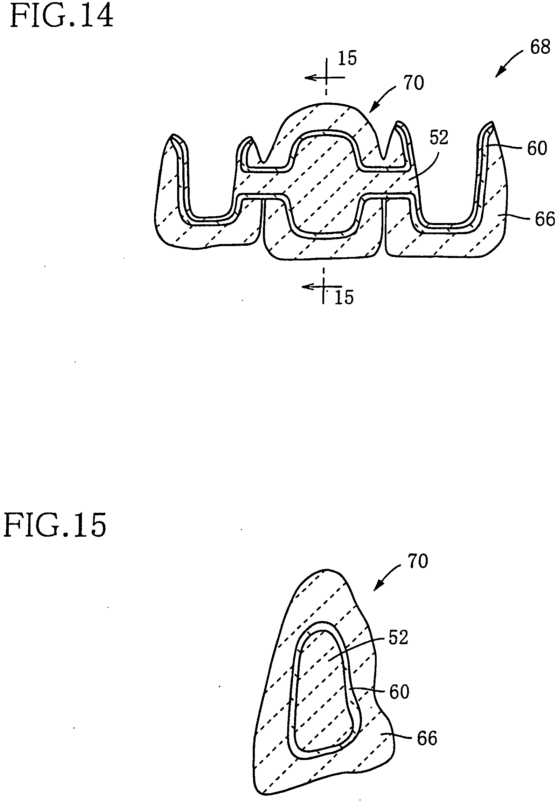

Subsequently, in a stage shown in Fig. 12, on a surface of the frame 52, a first ceramic layer 60 is mounted in substantially the same manner as the above-described crown. As shown in the figure, the first ceramic layer 60 is arranged to cover an outside surface of each of the core elements 54, 56 and an entire surface of the core element 58. Subsequently, in a stage shown in Fig. 13, on a surface of the first ceramic layer 60, a model layer 62 having a configuration of the teeth 44, 46 and missing tooth 42 is formed of wax or the like. Then, the assembly is set on a former 64. A method of forming the model layer 62 and a method of setting on the former 64 are substantially the same as in the manufacturing of the crown. Like the above-described case shown in Fig. 5, a casting ring is disposed around the assembly, so that the assembly is embedded in an investment material poured inside the casting ring whereby the investment material is given a desired configuration. Then, the model layer 62. i.e., wax, is burned out, and a void corresponding to the model layer 62 is formed (see Fig. 6). The formed void is then filled with the second porcelain for forming a second ceramic layer 66. A bridge 68 as shown in Fig. 14 is obtained after being taken out of the casting mold. Fig. 15 shows a cross section (taken along line 15-15 in Fig. 14) of a portion (pontic) 70 of the manufactured bridge 68, which portion corresponds to the missing tooth located in a center of the bridge 68. In the bridge 68 manufactured as described above, the first ceramic layer 60 and the second ceramic layer 66 both had desired configurations and thickness values. There was not seen crack or the like at all in the first and second ceramic layers 60, 66 and frame 52. Further, the bridge 68 had an appearance close to that of a natural tooth, and were provided with strength and tenacity sufficient for serving as replacement of a molar teeth. In the bridge 68, too, a third ceramic layer having a still higher transparency is disposed on a part or entirety of the surface of the second ceramic layer 66, as needed. However, the provision of the third ceramic layer is not indispensable, and it is omitted in Figs. 14 and 15. While the present invention has been explained in detail with reference to drawings, the invention can be carried out also in other modes, and can be subjected to various modifications within a range that is not deviated from the invention.

That is, these are only illustration and do not limit the invention described in claims. In the invention described in the claims, there are included various modifications and changes of the specific examples that are illustrated above.

Further, technical components explained in the present specification exhibit technical usefulness, either individually of each other or in any one of various combinations thereof that are not limited to combinations of what are described in claims at the time of application. Moreover, the techniques illustrated in the present specification achieve a plurality of objects simultaneously, and have technical usefulness by achieving each one of the objects.

## Claims

1. A method of manufacturing a dental prosthesis (38; 68), comprising:
a step of preparing a substrate (10; 52) of the dental prosthesis that is constituted by a dental molding material;
a step of forming a back coating layer (14; 60) on at least a part of a surface of the substrate, by using a first porcelain that is consisting essentially of ceramic;
a step of forming a casting mold (32) such that the substrate is disposed in the casting mold and such that a void (18) is provided on a surface of the back coating layer (14; 60); and
a step of forming a cast coating layer (36; 60) on at least a part of a surface of the back coating layer (14; 60), by pouring a second porcelain into the void (18) at a casting temperature, **characterised in that**
the second porcelain is consisting essentially of ceramic whose composition is different from that of the ceramic of the first porcelain such that viscosity of the second porcelain at the casting temperature is lower than that of the first porcelain.

2. The method according to claim 1,
wherein the casting mold forming step includes:
a sub-step of forming, on at least a part of the surface of the back coating layer (14; 60), a model layer (20; 62) made of a material that is eliminable by burning thereof;
a sub-step of embedding the model layer (20; 62) in a matrix (30) constituting the casting mold (32); and
a sub-step of forming the casting mold (32), which is provided with the void (18) corresponding to the model layer (20; 62), by burning and eliminating the model layer (20; 62) after hardening the matrix.

3. The method according to claim 1, wherein the substrate (10; 52) is a frame made of metal or ceramic.

4. The method according to claim 1, wherein the first porcelain is provided by a porcelain whose viscosity at the casting temperature is at least 1.5 times as high as that of the second porcelain.

5. The method according to claim 1, wherein the first porcelain has, as a main component, a glass composition that is essentially constituted by oxides having respective percentage contents as follows:
| | |
|---|---|
| SiO₂ | 40-75 (mass %); |
| Al₂O₃ | 10-20 (mass %); |
| K₂O | 5-15 (mass %); |
| Na₂O | 2-10 (mass %); |
| Li₂O | 0.1-2 (mass %); |
| ZrO₂ | 0-7 (mass %); |
| CaO | 0-5 (mass %); |
| MgO | 0-5 (mass %); and |
| SnO₂ | 0-30 (mass %); |
wherein the second porcelain has, as a main component, a glass composition that is essentially constituted by oxides having respective percentage contents as follows:
| | |
|---|---|
| SiO₂ | 60-70 (mass %); |
| Al₂O₃ | 10-20 (mass %); |
| K₂O | 5-15 (mass %); |
| Na₂O | 3-15 (mass %); |
| Li₂O | 0.1-3 (mass %); |
| ZrO₂ | 0-3 (mass %); |
| CaO | 0.1-5 (mass %); |
| MgO | 0.1-5 (mass %); |
| B₂O₃ | 0-3 (mass %); |
| CₑO₂ | 0-3 (mass %); and |
| Sb₂O₃ | 0-7 (mass %). |

6. The method according to claim 1, wherein the viscosity of the first porcelain at the casting temperature ranges from 2 × 10⁶ (cP) to 5 × 10⁷ (cP), while the viscosity of the second porcelain at the casting temperature ranges from 1 × 10⁶ (cP) to 3 × 10⁷ (cP).

7. A kit for forming, on a surface of a substrate of a dental prosthesis (38; 68), an armoured portion constituted by at least two coating layers (14, 36; 60, 66), the kit comprising:
a first material consisting essentially of ceramic for preparing a first porcelain that forms a back coating layer (14; 60) on the surface of the substrate; and
a second material consisting essentially of ceramic for preparing a second porcelain that forms, by casting, a coating layer (36; 66) on a surface of at least a part of the back coating layer (14; 60),
wherein viscosity of the second porcelain at a casting temperature is lower than that of the first porcelain, **characterized in that**
the first and second materials are prepared such that the viscosity of the first porcelain at the casting temperature is at least 1.5 times as high as that of the second porcelain.

8. The kit according to claim 7,
wherein the first material has, as a main component, a glass composition that is essentially constituted by oxides having respective percentage contents as follows:
| | |
|---|---|
| SiO₂ | 40-75 (mass %); |
| Al₂O₃ | 10-20 (mass %); |
| K₂O | 5-15 (mass %); |
| Na₂O | 2-10 (mass %); |
| Li₂O | 0.1-2 (mass %); |
| ZrO₂ | 0-7 (mass %); |
| CaO | 0-5 (mass %); |
| MgO | 0-5 (mass %); and |
| SnO₂ | 0-30 (mass %); |
wherein the second material has, as a main component, a glass composition that is essentially constituted by oxides having respective percentage contents as follows:
| | |
|---|---|
| SiO₂ | 60-70 (mass %); |
| Al₂O₃ | 10-20 (mass %); |
| K₂O | 5-15 (mass %); |
| Na₂O | 3-15 (mass %); |
| Li₂O | 0.1-3 (mass %); |
| ZrO₂ | 0-3 (mass %); |
| CaO | 0.1-5 (mass %); |
| MgO | 0.1-5 (mass %); |
| B₂O₃ | 0-3 (mass %); |
| CₑO₂ | 0-3 (mass %); and |
| Sb₂O₃ | 0-7 (mass %). |

9. The kit according to claim 7, wherein the first and second materials are prepared such that the viscosity of the first porcelain at the casting temperature ranges from 2 × 10⁶ (cP) to 5 × 10⁷ (cP), while the viscosity of the second porcelain at the casting temperature ranges from 1 × 10⁶ (cP) to 3 × 10⁷ (cP).

## Patentansprüche

1. Verfahren zum Herstellen einer Dentalprothese (38; 68), das umfasst:
einen Schritt des Vorbereitens eines Substrats (10; 52) der Dentalprothese, das durch ein Dentalformmaterial aufgebaut ist;
einen Schritt des Bildens einer Rückenbeschichtung (14; 60) auf zumindest einem Teil einer Oberfläche des Substrats unter Verwendung eines ersten Porzellans, das im Wesentlichen aus Keramik besteht;
einen Schritt des Bildens einer Gussform (32), so dass das Substrat in der Gussform angeordnet ist und so dass ein Hohlraum (18) auf einer Oberfläche der Rückenbeschichtung (14; 60) vorgesehen ist; und
einen Schritt des Bildens einer Gussbeschichtung (36; 60) auf zumindest einem Teil der Oberfläche der Rückenbeschichtung (14; 60) durch Eingießen eines zweiten Porzellans in den Hohlraum (18) bei einer Gusstemperatur, **dadurch gekennzeichnet, dass**
das zweite Porzellan im Wesentlichen aus Keramik besteht, deren Zusammensetzung sich von der der Keramik des ersten Porzellans so unterscheidet, dass die Viskosität des zweiten Porzellans bei der Gusstemperatur geringer ist als die des ersten Porzellans.

2. Verfahren nach Anspruch 1,
wobei der Gussformbildungsschritt beinhaltet:
einen Teilschritt des Bildens einer Modellschicht (20; 62), die aus einem Material gebildet ist, das durch Brennen davon eliminierbar ist, auf zumindest einem Teil der Oberfläche der Rückenbeschichtung (14; 60),;
einen Teilschritt des Einbettens der Modellschicht (20; 62) in eine Matrix (30), die die Gussform (32) aufbaut; und
einen Teilschritt des Bildens der Gussform (32), welche mit dem Hohlraum (18), der der Modellschicht (20; 62) entspricht, ausgestattet ist, durch Brennen und Eliminieren der Modellschicht (20; 62) nach dem Aushärten der Matrix.

3. Verfahren nach Anspruch 1, wobei das Substrat (10; 52) ein Rahmen ist, der aus Metall oder Keramik hergestellt ist.

4. Verfahren nach Anspruch 1, wobei das erste Porzellan durch ein Porzellan bereitgestellt wird, dessen Viskosität bei der Gusstemperatur zumindest 1,5 Mal so hoch ist wie die des zweiten Porzellans.

5. Verfahren nach Anspruch 1, wobei das erste Porzellan als einen Hauptbestandteil eine Glaszusammensetzung aufweist, die im Wesentlichen durch Oxide mit jeweiligen Prozentgehalten wie folgt aufgebaut ist:
| | |
|---|---|
| SiO₂ | 40-75 (Masse-%); |
| Al₂O₃ | 10-20 (Masse-%); |
| K₂O | 5-15 (Masse-%); |
| Na₂O | 2-10 (Masse-%); |
| Li₂O | 0,1-2 (Masse-%); |
| ZrO₂ | 0-7 (Masse-%); |
| CaO | 0-5 (Masse-%); |
| MgO | 0-5 (Masse-%); und |
| SnO₂ | 0-30 (Masse-%); |
wobei das zweite Porzellan als einen Hauptbestandteil eine Glaszusammensetzung aufweist, die im Wesentlichen durch Oxide mit jeweiligen Prozentgehalten wie folgt aufgebaut ist:
| | |
|---|---|
| SiO₂ | 60-70 (Masse-%); |
| Al₂O₃ | 10-20 (Masse-%); |
| K₂O | 5-15 (Masse-%); |
| Na₂O | 3-15 (Masse-%); |
| Li₂O | 0,1-3 (Masse-%); |
| ZrO₂ | 0-3 (Masse-%); |
| CaO | 0,1-5 (Masse-%); |
| MgO | 0,1-5 (Masse-%); |
| B₂O₃ | 0-3 (Masse-%); |
| CeO₂ | 0-3 (Masse-%); und |
| Sb₂O₃ | 0-7 (Masse-%). |

6. Verfahren nach Anspruch 1, wobei die Viskosität des ersten Porzellans bei der Gusstemperatur von 2 x 10⁶ (cP) bis 5 x 10⁷ (cP) reicht, während die Viskosität des zweiten Porzellans bei der Gusstemperatur von 1 x 10⁶ (cP) bis 3 x 10⁷ (cP) reicht.

7. Kit zum Bilden eines verstärkten Bereichs, der durch zumindest zwei Beschichtungen (14; 36; 60, 66) aufgebaut ist, auf einer Oberfläche eines Substrats einer Dentalprothese (38; 68), wobei das Kit umfasst:
ein erstes Material, das im Wesentlichen aus Keramik besteht, zum Herstellen eines ersten Porzellans das eine Rückenbeschichtung (14; 60) auf der Oberfläche des Substrats bildet; und
ein zweites Material, das im Wesentlichen aus Keramik besteht, zum Herstellen eines zweiten Porzellans, das durch Gießen eine Beschichtung (36; 66) auf einer Oberfläche zumindest eines Teils der Rückenbeschichtung (14; 60) bildet,
wobei die Viskosität des zweiten Porzellans bei einer Gusstemperatur geringer ist als die des ersten Porzellans, **dadurch gekennzeichnet, dass**
das erste und zweite Material so angefertigt sind, dass die Viskosität des ersten Porzellans bei der Gusstemperatur zumindest 1,5 Mal so hoch ist wie die des zweiten Porzellans.

8. Kit nach Anspruch 7,
wobei das erste Porzellan als einen Hauptbestandteil eine Glaszusammensetzung aufweist, die im Wesentlichen durch Oxide mit jeweiligen Prozentgehalten wie folgt aufgebaut ist:
| | |
|---|---|
| SiO₂ | 40-75 (Masse-%); |
| Al₂O₃ | 10-20 (Masse-%); |
| K₂O | 5-15 (Masse-%); |
| Na₂O | 2-10 (Masse-%); |
| Li₂O | 0,1-2 (Masse-%); |
| ZrO₂ | 0-7 (Masse-%); |
| CaO | 0-5 (Masse-%); |
| MgO | 0-5 (Masse-%); und |
| SnO₂ | 0-30 (Masse-%); |
wobei das zweite Porzellan als einen Hauptbestandteil eine Glaszusammensetzung aufweist, die im Wesentlichen durch Oxide mit jeweiligen Prozentgehalten wie folgt aufgebaut ist:
| | |
|---|---|
| SiO₂ | 60-70 (Masse-%); |
| Al₂O₃ | 10-20 (Masse-%); |
| K₂O | 5-15 (Masse-%); |
| Na₂O | 3-15 (Masse-%); |
| Li₂O | 0,1-3 (Masse-%); |
| ZrO₂ | 0-3 (Masse-%); |
| CaO | 0,1-5 (Masse-%); |
| MgO | 0,1-5 (Masse-%); |
| B₂O₃ | 0-3 (Masse-%); |
| CeO₂ | 0-3 (Masse-%); und |
| Sb₂O₃ | 0-7 (Masse-%). |

9. Kit nach Anspruch 7, wobei das erste und zweite Material so angefertigt sind, dass die Viskosität des ersten Porzellans bei der Gusstemperatur von 2 x 10⁶ (cP) bis 5 x 10⁷ (cP) reicht, während die Viskosität des zweiten Porzellans bei der Gusstemperatur von 1 x 10⁶ (cP) bis 3 x 10⁷ (cP) reicht.

## Revendications

1. Procédé de fabrication d'une prothèse dentaire (38 ; 68), comprenant :
une étape de préparation d'un substrat (10 ; 52) de la prothèse dentaire qui est constitué d'un matériau de moulage dentaire ;
une étape de formation d'une couche d'enduction d'envers (14 ; 60) sur au moins une partie d'une surface du substrat, en utilisant une première porcelaine qui est constituée essentiellement d'une céramique ;
une étape de formation d'un moule de coulée (32) de telle sorte que le substrat soit disposé dans le moule de coulée et de telle sorte qu'une cavité (18) soit prévue sur une surface de la couche d'enduction d'envers (14 ; 60) ; et
une étape de formation d'une couche d'enduction par coulée (36 ; 60) sur au moins une partie d'une surface de la couche d'enduction d'envers (14 ; 60), en versant une deuxième porcelaine dans la cavité (18) à une température de coulée,
**caractérisé en ce que**
la deuxième porcelaine est constituée essentiellement d'une céramique dont la composition est différente de celle de la céramique de la première porcelaine de sorte que la viscosité de la deuxième porcelaine à la température de coulée soit inférieure à celle de la première porcelaine.

2. Procédé selon la revendication 1,
dans lequel l'étape de formation de moule de coulée comporté :
une sous-étape consistant à former, sur au moins une partie de la surface de la couche d'enduction d'envers (14 ; 60), une couche modèle (20 ; 62) réalisée en matériau éliminable par sa combustion ;
une sous-étape consistant à intégrer la couche modèle (20 ; 62) dans une matrice (30) constituant le moule de coulée (32) ; et
une sous-étape consistant à former le moule de coulée (32), qui est pourvu de la cavité (18) correspondant à la couche modèle (20 ; 62), par la combustion et l'élimination de la couche modèle (20 ; 62) après durcissement de la matrice.

3. Procédé selon la revendication 1, dans lequel le substrat (10 ; 52) est un cadre réalisé en métal ou en céramique.

4. Procédé selon la revendication 1, dans lequel la première porcelaine est pourvue d'une porcelaine dont la viscosité à la température de coulée est d'au moins 1,5 fois plus élevée que celle de la deuxième porcelaine.

5. Procédé selon la revendication 1, dans lequel la première porcelaine a, comme composant principal, une composition de verre qui est essentiellement constituée d'oxydes ayant des teneurs respectives en pourcentage comme suait :
SiO₂ 40-75 (% en masse) ;
Al₂O₃ 10-20 (% en masse) ;
K₂O 5-15 (% en masse) ;
Na₂O 2-10 (% en masse) ;
Li₂O 0,1-2 (% en masse) ;
ZrO₂ 0-7 (% en masse) ;
CaO 0-5 (% en masse) ;
MgO 0-5 (% en masse) ; et
SnO₂ 0-30 (% en masse) ;
où la deuxième porcelaine a, comme composant principal, une composition de verre qui est essentiellement constituée d'oxydes ayant des teneurs respectives en pourcentage comme suit :
SiO₂ 60-70 (% en masse) ;
Al₂O₃ 10-20 (% en masse) ;
K₂O 5-15 (% en masse) ;
Na₂O 3-15 (% en masse) ;
Li₂O 0,1-3 (% en masse) ;
ZrO₂ 0-3 (% en masse) ;
CaO 0,1-5 (% en masse) ;
MgO 0,1-5 (% en masse) ;
B₂O₃ 0-3 (% en masse) ;
CₑO₂ 0-3 (% en masse) ; et
Sb₂O₃ 0-7 (% en masse).

6. Procédé selon la revendication 1, dans lequel la viscosité de la première porcelaine à la température de coulée se situe dans la plage allant de 2̈×10⁶ (cP) à 5×10⁷ (cP), alors que la viscosité de la deuxième porcelaine à la température de coulée se situe dans la plage allant de 1×10⁶ (cP) à 3×10⁷ (cP).

7. Kit destiné à former, sur une surface d'un substrat d'une prothèse dentaire (38 ; 68), une partie blindée constituée d'au moins deux couches d'enduction (14, 36 ; 60, 66), le kit comprenant :
un premier matériau constitué essentiellement d'une céramique pour la préparation d'une première porcelaine qui forme une couche d'enduction d'envers (14 ; 60) sur la surface du substrat ; et
un deuxième matériau constitué essentiellement d'une céramique pour la préparation d'une deuxième porcelaine qui forme, par coulée, une couche d'enduction (36 ; 66) sur une surface d'au moins une partie de la couche d'enduction d'envers (14 ; 60),
où la viscosité de la deuxième porcelaine à une température de coulée est inférieure à celle de la première porcelaine,
**caractérisé en ce que**
les premier et deuxième matériaux sont préparés de telle sorte que la viscosité de la première porcelaine à la température de coulée soit d'au moins 1,5 fois plus élevée que celle de la deuxième porcelaine.

8. Kit selon la revendication 7,
dans lequel le premier matériau a, comme composant principal, une composition de verre qui est essentiellement constituée d'oxydes ayant des teneurs respectives en pourcentage comme suit :
SiO₂ 40-75 (% en masse) ;
Al₂O₃ 10-20 (% en masse) ;
K₂O 5-15 (% en masse) ;
Na₂O 2-10 (% en masse) ;
Li₂O 0,1-2 (% en masse) ;
ZrO₂ 0-7 (% en masse) ;
CaO 0-5 (% en masse) ;
MgO 0-5 (% en masse) ; et
SnO₂ 0-30 (% en masse).
où le deuxième matériau a, comme composant principal, une composition de verre qui est essentiellement constituée d'oxydes ayant des teneurs respectives en pourcentage comme suit :
SiO₂ 60-70 (% en masse) ;
Al₂O₃ 10-20 (% en masse) ;
K₂O 5-15 (% en masse) ;
Na₂O 3-15 (% en masse) ;
Li₂O 0,1-3 (% en masse) ;
ZrO₂ 0-3 (% en masse) ;
CaO 0,1-5 (% en masse) ;
MgO 0,1-5 (% en masse) ;
B₂O₃ 0-3 (% en masse) ;
CeO₂ 0-3 (% en masse) ; et
Sb₂O₃ 0-7 (% en masse).

9. Kit selon la revendication 7, dans lequel les premier et deuxième matériaux sont préparés de telle sorte que la viscosité de la première porcelaine à la température de coulée se situe dans la plage allant de 2×10⁶ (cP) à 5×10⁷ (cP), alors que la viscosité de la deuxième porcelaine à la température de coulée se situe dans la plage allant de 1×10⁶ (cP) à 3×10⁷ (cP).
